# EUROPEAN PATENT APPLICATION

(11) **EP 0 822 352 A1**
(43) Date of publication of application: **04.02.1998**
(21) Application number: 97305541.1
(22) Date of filing: 24.07.1997
(51) Int. Cl.: F16F 13/06

(54) **Vibration damping assemblies**

(30) Priority: 29.07.1996 GB 9615850
(71) Applicant: DRAFTEX INDUSTRIES LIMITED, Edinburgh EH2 3AP, Scotland (GB)
(72) Inventor: Tournier, Pascal, Residence du Bois St. Louis, 44700 Orvault (FR)
(74) Representative: Bibby, William Mark

(57) **Abstract**

A hydro-elastic engine mount for a motor vehicle comprises a rigid ring (10) connected to a rigid boss (14) by a stiff rubber support (12), the ring (10) being connected to the vehicle body or chassis and the boss (14) being connected to the engine so that vibrations of the engine are accommodated and at least partially damped by the rubber support (12). In addition, a separate hydraulic damping module (15) is provided. This comprises two working chambers (16,18) connected by a restrictive-flow hydraulic fluid passageway (20). Vibration of the rubber support (12) thus cause compression of the two chambers (16,18) alternately and consequent fluid displacement through passageway 20, the restrictive-flow passageway (20) providing a damping effect. The hydraulic damping module (15) is produced separately as by a blow-moulding operation and is inserted as a unit. This way, the same basic engine mount can be used with any one of a plurality of hydraulic damping units (15), each having different and predetermined damping characteristics.

## Description

The invention relates to a vibration damping assembly, for damping vibration of a first element with reference to a second element, comprising a mechanical damping unit incorporating two relatively rigid members for respective connection to the two elements and resilient material interconnecting the two members to accommodate and at least partially damp the vibrations, and a separate hydraulic damping unit comprising flexible-walled chamber means produced by a moulding operation and for receiving hydraulic fluid and insertable into the mechanical damping unit between the two members thereof so that at least some of the said vibrations cause wall-flexing of the flexible-walled chamber means and consequent displacement of the hydraulic fluid, the hydraulic damping unit incorporating flow-resisting means for resisting the hydraulic fluid displacement.

Such assembly is known from EP-A-568 340. In this case, the damping unit comprises top and bottom diaphragm members sealed together and having a dividing wall dividing the interior space into two chambers. This construction means that the damping unit needs to be inserted into a mechanical damping unit having a space suited to receive both chambers, both of which will thus be subjected to the same directional force in response to vibration.

In accordance with the invention, however, the known assembly is characterised in that the damping unit comprises two spaced chambers interconnected by a longitudinal flexible conduit.

Vibration damping mounts embodying the invention will now be described, by way of example only, with reference to the accompanying diagrammatic drawings in which:
Figure 1 is an end view of one of the mounts, for a vehicle engine;
Figure 2 is a section on the line II-II of Figure 1;
Figure 3 is a perspective view of a moulded hydraulic chamber in the engine mount of Figures 1 and 2;
Figure 4 shows a moulded assembly of two connected hydraulic chambers incorporating integrated abutments;
Figure 5 is a cross-section through one of the abutments;
Figure 6 shows a modification to one of the chambers;
Figure 7 shows an engine mount incorporating the chamber of Figure 6;
Figure 8 is a cross-section on the line VIII-VIII of Figure 7;
Figure 9 shows another possible modification to one of the chambers;
Figure 10 shows a cross-section through another one of the mounts on the line X-X of Figure 11;
Figure 11 is an underside view of Figure 10; and
Figure 12 is a scrap section on the line XII-XII of Figure 11.

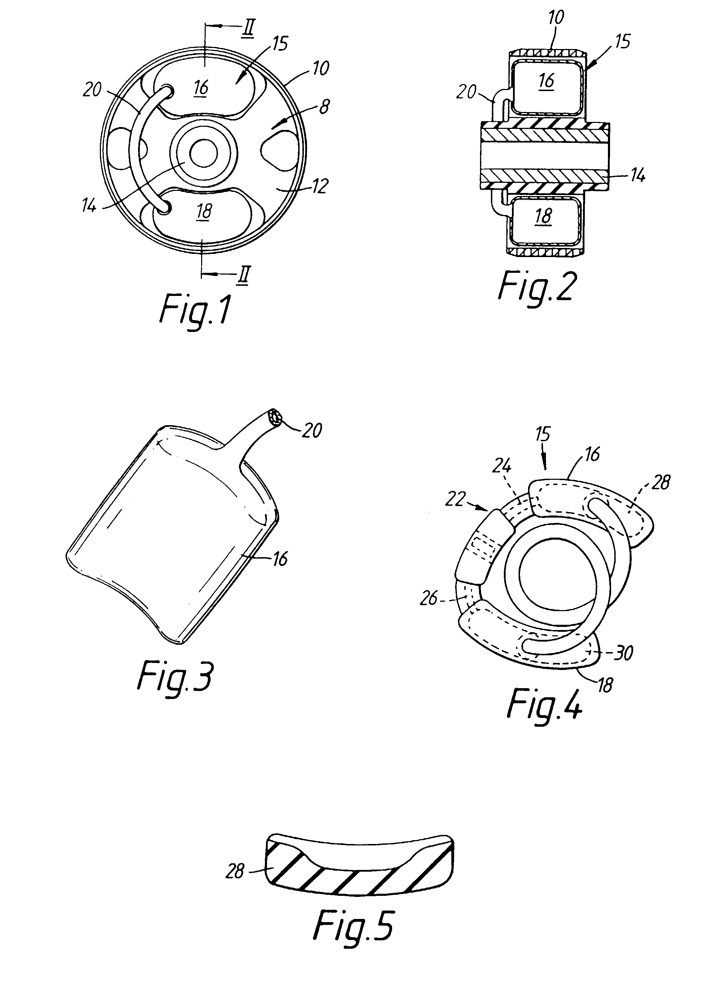

In the engine mount of Figure 1, there is a mechanical damping part 8 comprising a rigid outer ring 10 to which is connected an element 12 made of relatively stiff rubber (or possibly a similar resilient material) in which is supported a metal bush 14.

In use, the bush 14 is attached to the engine (or other vibrating member), and the ring 10 is attached to the structure from which the engine is to be supported (the body or chassis of the vehicle). In practice, several engine mounts would be used to support the engine. In use, vibrations of the engine cause flexing of the rubber element 12 and are at least partially absorbed by this element. In addition, the engine mount incorporates a hydraulic damping unit or module 15 comprising two flexible hydraulic chambers 16 and 18 which are connected by a conduit 20 and are flexible and at least partially filled with hydraulic fluid. Vibrations of the engine cause each of the chambers 16,18 to be partially compressed in turn by the vibrating rubber element 12, thus displacing some of the hydraulic fluid through the conduit 20 to the other chamber. The conduit 20 is arranged to provide a restricted flow path for the hydraulic fluid, thus providing a damping effect on the vibrations, particularly at frequencies corresponding to the resonant frequency of the fluid in the conduit 20.

The engine vibrations can be of various different types. For example, they may be at a relatively high frequency and small amplitude. Another type of vibration is at lower frequency and higher amplitude. The engine mount can be designed so that high frequency, low amplitude vibrations have substantially no effect on the damping chambers 16,18,these vibrations being damped substantially wholly by the rubber element 12; this can be achieved by arranging for a certain amount of play between the rubber element 12 and the chambers 16,18. In such a case, therefore, the hydraulic damping module 15 would only come into operation when larger amplitude vibrations occur.

In accordance with a feature of the engine mount, the hydraulic damping module 15 incorporating the chambers 16,18, and the conduit 20, is produced such as by blow-moulding from a suitable thermoplastic material and is then assembled as a unit into the mechanical part 8 of the engine mount (the ring 10, the rubber element 12 and the bush 14).

In this way, a modular construction is produced. A basic engine mount comprising the mechanical part 8 (the ring 10, the rubber element 12 and the bush 14) can be produced and used for a wide range of applications. Thus, for very simple applications, it can be used just in that form - that is, without the hydraulic damping module 15. For improved support and improved vibration damping, it will incorporate the hydraulic damping module 15. However, the latter can be designed and produced with specific characteristics selected out of a wide range of possible characteristics, in order to suit the particular damping requirements (for example, size and mass of the engine, the type of vibrations to be expected, and the degree and type of damping required). The hydraulic damping module 15 is thus moulded to produce the required characteristics - and with possible variations in size and/or design and complexity as will be explained in more detail below. In each case, the mechanical part 8 would be the same (although the rubber element 12 can be varied if desired). Such a modular arrangement facilitates serious production and produces cost saving.

The two chambers 16 and 18 can be moulded integrally with the conduit 20 or could be moulded separately and assembled together, with the conduit 20, before being assembled into the mechanical part 8.

Figure 3 shows, in perspective view, a moulded chamber, such as the chamber 16.

Figure 4 shows a more complex hydraulic damping module 15. In this case, the module 15 comprises chambers 16 and 18 which are connected by the conduit 20 as before. In addition, a decoupling arrangement indicated generally at 22 is provided. This is connected by tubes 24 and 26 to the chambers 16 and 18 and incorporates a valve arrangement or other similar device which comes into operation only under certain circumstances: for example, the valve may comprise a vibratable plate having a small predetermined amount of play. In response to vibrations of a certain frequency and amplitude (in particular, high frequency, low amplitude vibrations), the valve vibrates correspondingly, thus transmitting the vibrations between the hydraulic fluid in the two chambers which damps the vibrations.

In addition, the chambers 16 and 18 of the module 15 incorporate abutment members 28 and 30, shown dotted. These abutments can be incorporated into the chambers 16,18 after the initial moulding process, via the openings which are provided for connection to the tubes 24,26. The abutments 28,30 are flexible and made (for example) of an elastomeric material. They provide additional damping in the event of sudden impulse forces of relatively large amplitude. Such impulses cause the chambers 16,18 to move relative to the abutments incorporated within them, thus resulting in increased fluid movement for the fluid positioned under the abutments.

Figure 5 shows a particular form which one of the abutments can have.

In the arrangements as so far described, the damping module comprises two working chambers. Instead, however, one of the chambers can be a working chamber and the other may be a compensation chamber. In such a case, the working chamber is alternately compressed and expanded by the vibrations of the engine mount, and fluid correspondingly flows from the working chamber into the compensation chamber and then returns to the working chamber from the compensation chamber. Such fluid flow again takes place through a restrictive conduit which provides damping. In such a case, the compensation chamber is not directly subjected to the vibrational movements of the engine mount.

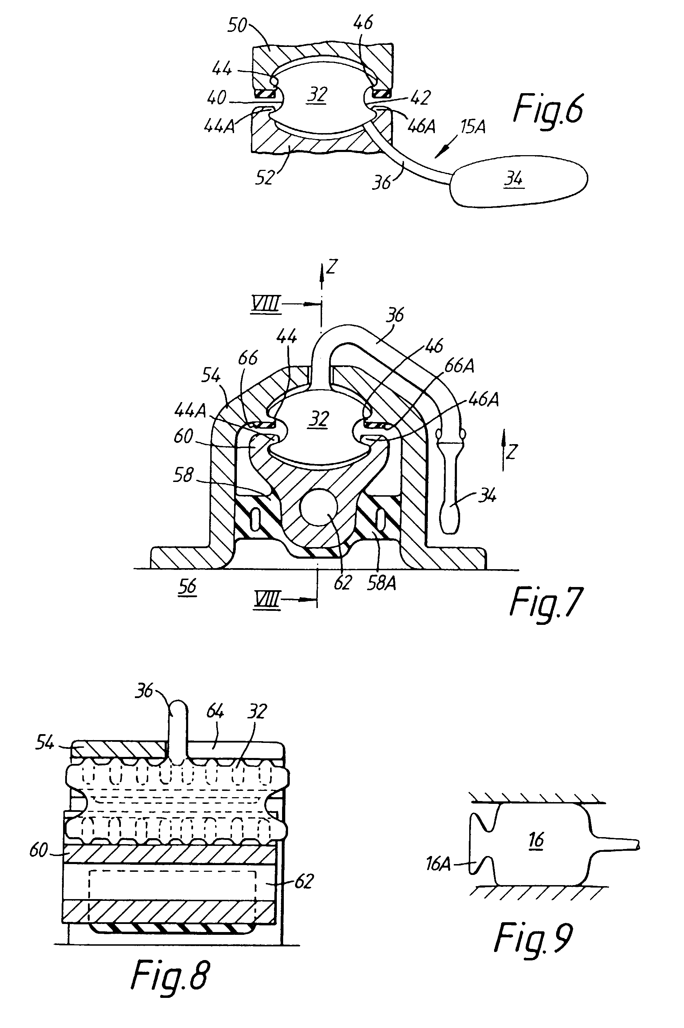

Such an arrangement is shown in Figure 6. In this case, the damping module 15A comprises a working chamber 32 which is connected to a compensation chamber 34 via a damping conduit 36. As before, the damping module 15A is produced by moulding (such as blow-moulding) from thermoplastics material, either being produced as a single unit or the chambers 32 and 34 and the conduit 36 being produced separately and then assembled together, the whole module 15A then being inserted into the basic engine mount.

In this example, the working chamber 32 is shaped to provide grooves 40,42. These are engaged by shoulders 44,44A,46,46A which are formed on rigid parts 50 and 52 respectively connected to the ring 10 and the rubber element 12 of the engine mount (see Fig. 1). These rigid parts 50,52 have curved walls matching the general shape of the moulded working chamber 32. The shoulders 44,44A,46 and 46A ensure that the vibratory movement of the movable elements of the engine mount can alternately compress and expand the working chamber 32. In this way, the working chamber 32 can simply be mounted in position by a simple assembly operation. Instead, though, the working chamber could be welded or stuck in position.

Figures 7 and 8 show, in more detail, an engine mount incorporating the working chamber 32. The engine mount of Figure 7 comprises a rigid cover 54 made of metal, for example, which is firmly secured to the body or chassis 56 of the vehicle by suitable bolts or other fixtures not shown. Rubber elements 58 and 58A are attached to the inside of the cover 54 and extend towards each other to support the rigid member 60, made of metal for example. The rigid member 60 carries a boss 62 which, in use, is securely attached to the engine. Vibrations of the engine, generally in the direction Z, are thus accommodated and partially absorbed by the effect of the rubber elements 58 and 58A.

In addition, the cover 54 and the rigid member 58 are shaped to provide the shoulders 44,44A,46,46A shown in Figure 6. In the manner explained with reference to Figure 6, these shoulders engage the grooves 40,42 in the working chamber 32 and support it. The cover 54 and the rigid member 60 have curved walls matching the general shape of the working chamber 32. In a manner already explained, therefore, the working chamber 32 provides additional damping.

Figure 8 shows how the working chamber 32 can be simply slid in to the engine mount between the rigid cover 54 and the rigid member 60. A slot 64 in the cover 54 provides access for the pipe 36 during this process.

The cover 54 may be provided with resilient stops 66 and 66A to cushion any impact between the cover 54 and the member 60.

Figure 8 shows that the working chamber 32 can be of "bellows-form", with its outside surface formed to provide peaks and troughs. In the case where the chamber is not symmetrical around the axis of the bellows, the bellows turns can be shaped to provide a constant stiffness along the length of each turn.

Figure 9 shows a modification in which one of the chambers of the damping module (for example, the chamber 16 of Figures 1,2 or 4) is provided with an integrally moulded supplementary chamber 16A of bellows form, the supplementary chamber 16A being shaped so as to have an increased flexibility as compared with the remainder of the chamber. In the event of high frequency vibrations of relatively low amplitude, the supplementary chamber 16A expands readily and there is thus little transfer of hydraulic fluid from the chamber and a correspondingly low damping effect. In the event of large amplitude vibrations, however, the supplementary chamber 16A becomes fully expanded and hydraulic fluid is thus transferred from the chamber to the other chamber, producing the required damping effect.

During manufacture, the chambers of the damping modules 15,15A, must of course be filled with hydraulic fluid through a hole provided for this purpose. Such a hole can be closed off, after the filling process, using a screw-threaded element which is heated and then screwed into the hole. The material of the chamber around the screw-threaded element becomes formed with a corresponding thread because of the high temperature of the element. The element and the adjacent material and the complementary thread formed by the hot screw-threaded element help to provide improved sealing.

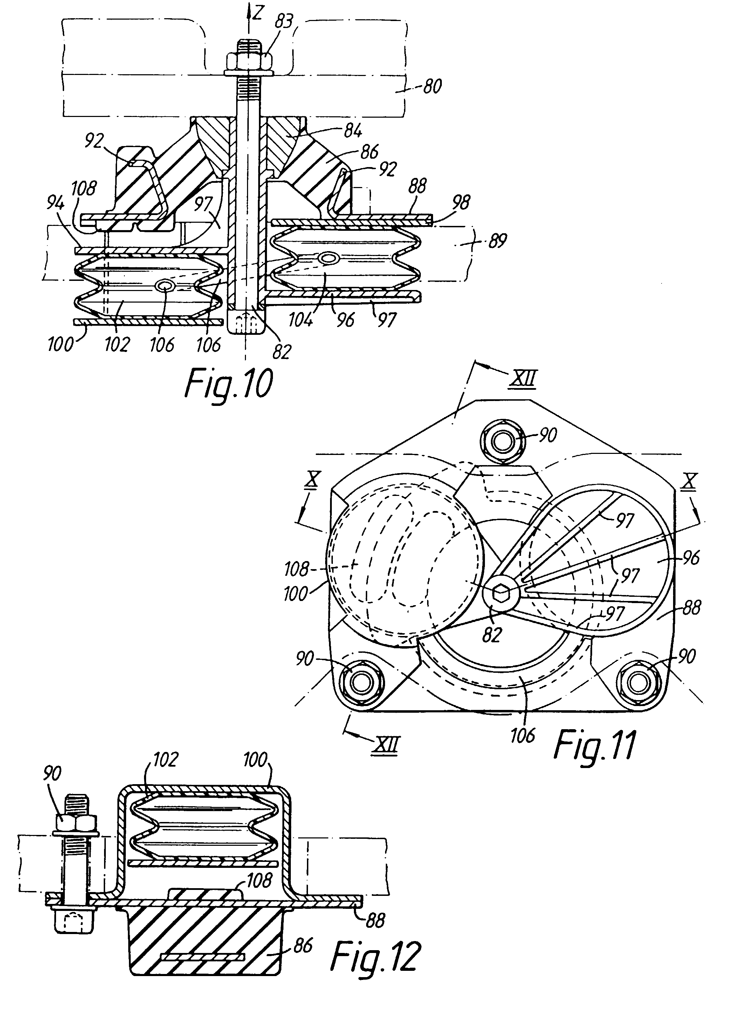

Figures 10,11 and 12 show a vibration damping mount having a rigid support extending symmetrically and vertically through it, this support being attached to the vibrating element and vibrating in a vertical direction with that element and relative to the other element. The mount of Figures 10 and 11 can be used for supporting an element such as an engine or a gear box in a motor vehicle. The engine is shown dotted at 80 in Figure 10. The mount comprises a rigid metal tube 82 attached to the engine 80 by a nut 83 and carrying a rigid boss 84. The boss 84 is connected by a stiff rubber element 86 to a plate 88 secured to the chassis or body of the vehicle (indicated dotted at 89) by bolts 90. The plate 88 is apertured with upturned edges 92 attached to the rubber element 86.

The stiff metal tube 82 supports a rigidly attached generally circular platform 94 which extends transversely outwards on one side of the tube 82 at a point intermediate the ends of the tube and is reinforced by webs 95. On the other side of the tube 82, at its distal end, the tube supports another circular platform 95 which is reinforced by webs 97.

The plate 88 is rigidly attached to a circular platform 98 by the bolts 90. On the diagonally opposite side of the tube 82, a U-shaped cover 100 is attached to the plate 88 by the bolts 90 (see also Figure 12).

Vibration in the direction of axis Z between the engine 80 and the vehicle body or chassis to which the plate 88 is rigidly attached is partially absorbed by alternate compression and expansion of the stiff rubber element 86. Any such vibration will of course cause platform 94 to vibrate with reference to cover 100 and will similarly cause platform 98 to vibrate with reference to platform 96. Thus, vibration in one direction along axis Z will cause platform 94 and cover 100 to move towards each other and simultaneously cause platforms 96 and 98 to move apart - and vice versa for vibration in the opposite direction along the axis Z. The rubber element 86 also limits transverse vibrations.

In accordance with a feature of the invention, a moulded damping module comprising two flexible walled hydraulic chambers 102 and 104 interconnected by a conduit 106 is inserted as a unit in the mount so that chambers 102 and 104 are respectively positioned between platform 94 and cover 100 and between platforms 96 and 98. The hydraulic chambers, filled with hydraulic fluid, operate generally in the same way as described above with reference to the other Figures. Thus, the vibration in the direction of the axis Z cause each of the chambers 102 and 104 to be partially compressed in turn, thus displacing some of the hydraulic fluid through the conduit 106 to the other chamber. As before, the conduit 106 provides a restricted flow path for the hydraulic fluid and has a resonant frequency such as to damp relatively low frequency, high amplitude vibrations. If desired, an additional de-coupling arrangement between the two chambers 102 and 104 can be provided which has a valve arranged to respond only in the event of relatively high frequency, low amplitude vibrations.

An abutment 108 limits upward movement of the plate 94 and thus of the engine.

The damping module can be selected (from a set of modules with various damping characteristics so as) to suit the required damping capabilities of the engine mount.

Filling of the moulded chambers in all the embodiments described can take place during or immediately after the blow-moulding process. The blow-moulding process may be carried out using the hydraulic fluid itself, but in vapourised heated form, the vapour subsequently cooling to form the hydraulic fluid.

Any residual air in the hydraulic chambers, possibly induced by the moulding operation, can be removed using a suitable substance which is placed in the chamber and absorbs the air either physically or by chemical combination.

## Claims

1. A vibration damping assembly, for damping vibration of a first element with reference to a second element, comprising a mechanical damping unit incorporating two relatively rigid members (10,14;54,60;82,88) for respective connection to the two elements and resilient material (12;58,58A;86) interconnecting the two members (10,14;54,60;82,88) to accommodate and at least partially damp the vibrations, and a separate hydraulic damping unit (15;15A;102,104) comprising flexible-walled chamber means (16,18;32,34;102,104) produced by a moulding operation and for receiving hydraulic fluid and insertable into the mechanical damping unit between the two members (10,14;54,60;82,88) thereof so that at least some of the said vibrations cause wall-flexing of the flexible-walled chamber means and consequent displacement of the hydraulic fluid, the hydraulic damping unit (15;15A;102,104) incorporating flow-resisting means for resisting the hydraulic fluid displacement, characterised in that the damping unit (15;15A;102,104) comprises two spaced chambers (16,18;32,34;102,104) interconnected by a longitudinal flexible conduit (20;36;106).

2. An assembly according to claim 1, characterised in that the flexible-walled chamber means (16,18;32,34;102, 104) is produced by blow-moulding.

3. An assembly according to claim 1 or 2, characterised in that each of the chambers (16,18;32,34;102,104) is mountable between the two members (10,14;54,60;82,88) of the mechanical damping unit in such a way that each chamber (16,18;32,34;102,104) is compressed by the said vibrations in turn, the flexible conduit (20;36;106) including the flow-resisting means.

4. An assembly according to claim 3, characterised by means (22) providing a by-pass path for transmitting vibrations between the hydraulic fluid in the two chambers (16,18) which is operative in the event of vibrations within a certain range of frequency and/or amplitude.

5. An assembly according to claim 1 or 2, characterised in that the chambers comprise a working chamber (32) and a compensation chamber (34).

6. An assembly according to claim 5, characterised in that the working chamber (32) has a wall which incorporates a formation (40,42) for engaging with complementary formations (44,44A,46,46A) respectively connected to the two members (10,14;54,60) of the mechanical damping unit, whereby the said vibrations cause alternative expansion and compression of the working chamber (32).

7. An assembly according to any preceding claim, characterised in that at least one chamber incorporates a member (28,30) positioned within it but occupying less than its internal volume, whereby to limit the amplitude of vibration.

8. An assembly according to any preceding claim, characterised in that one chamber (16) incorporates means defining a supplementary chamber (16A) communicating with said one chamber (16), the supplementary chamber (16A) being more flexible than the flexible wall of said one chamber (16) whereby to accommodate low-amplitude vibrations and prevent such vibrations from substantially affecting the flexible wall of said one chamber (16).

9. An assembly according to claim 1, characterised in that a first one (82) of the relatively rigid members of the mechanical damping unit comprises first and second platforms rigidly connected together and juxtaposed with support means (94,96) connected to the second rigid member (82) so that relative movement in the predetermined direction between the two rigid members (82,88), in response to vibratory movement in a corresponding direction between the first and second elements, moves the first platform (98) towards the support means (94,96) and the second platform (100) away from the support means (94,96), and in that the hydraulic damping unit comprises two flexible-walled chambers (102,104) respectively insertable between the first platform (98) and the support means (94,96) and the second platform (100) and the support means (94,96).

10. An assembly according to claim 9, characterised in that the said second relatively rigid member comprises a longitudinally extending member (82) extending in the directions of the vibrations and rigidly supporting the support means (94,96) extending transversely to the vibration directions, and the first and second platforms (98,100) are attached to the first relatively rigid member (88) to extend transversely to the vibration directions.

11. An assembly according to claim 10, characterised in that the second relatively rigid member is a rod-like member (82) and the support means comprises third and fourth platforms (94,96) extending outwardly from the rod-like member (82) at different axial positions therealong, the first platform (98) being mounted parallel to and facing the third platform (96) and the second platform (100) being mounted parallel to and facing the fourth platform (94).

12. An assembly according to claim 11, characterised in that the first relatively rigid member (88) comprises an apertured member through which the rod-like member (82) passes, the apertured member supporting the first and second platforms (98,100), and the resilient material (86) of the mechanical damping unit interconnecting the apertured member (88) to the rod-like member (82).

13. An assembly according to any preceding claim, characterised in that the hydraulic damping unit (15;15A;102,104) is a selected one of a predetermined plurality of hydraulic damping units, the hydraulic damping units being insertable as respective units into the mechanical damping unit and having respectively different damping characteristics.
